# EUROPEAN PATENT APPLICATION

(11) **EP 4 751 962 A1**
(43) Date of publication of application: **03.06.2026**
(21) Application number: 23959516.8
(22) Date of filing: 20.11.2023
(51) Int. Cl.: B60K 35/00, B60K 35/50, B60R 11/02, B60R 11/00

(54) **DISPLAY DEVICE FOR VEHICLE**

(71) Applicant: LG Electronics Inc., Yeongdeungpo-gu Seoul 07336 (KR)
(72) Inventor: HWANG, Hyokune, Seoul 06772 (KR); CHO, Youngjoo, Seoul 06772 (KR); BAE, Jinwan, Seoul 06772 (KR); KWON, Boan, Seoul 06772 (KR)
(74) Representative: Vossius & Partner Patentanwälte Rechtsanwälte mbB
(86) International application number: PCT/KR2023/018703
(87) International publication number: WO 2025/110259

(57) **Abstract**

This display device for a vehicle comprises: a flexible display; an upper plate connected to an upper part of the flexible display; a lower plate spaced from the upper plate and connected to a lower part of the flexible display; a support disposed on the front of the flexible display; a linkage connected to the upper plate and the lower plate; a cam rail disposed on a base and guiding the linkage; a guide rail disposed on the base so as to be spaced apart from the cam rail; a rising and descending body disposed so as to be raised and lowered along the rail; a raising and lowering driving source for raising and lowering the rising and descending body; and a rotation driving source that disposed on the rising and descending body and rotating the linkage.

## Description

### [Technical Field]

The present invention relates to a vehicle display device.

### [Background Art]

A display device can be mounted on a vehicle.

An example of a vehicle-mounted display device is a vehicle display device disclosed in U.S. Pat. No. 10-2343244 B1 Public Notice dated December 23, 2021, which is installed in the interior of a vehicle and has a variable display area, comprising: a first frame having one end coupled to an interior member of the vehicle; a second frame having one end coupled to the other end of the first frame and rotatable relative to the first frame about the one end; a flexible display disposed on one surface of the first frame and the second frame and foldable in a direction such that the other surface of the first frame overlaps the other surface of the second frame; and an elastic member that applies tension to the flexible display inwardly of the interior member when the flexible display is unfolded.

### [Disclosure]

### [Technical Problem]

The present embodiment provides a vehicle display device that changes shape according to the situation of the passenger or the vehicle.

The present embodiment provides a vehicle display device that facilitates securing a driver's field of vision while the vehicle is in motion.

The present embodiment provides a vehicle display device capable of providing a large screen when the vehicle is not in motion.

### [Technical Solution]

A vehicle display device for a according to the present embodiment comprises a flexible display; an upper plate connected to an upper portion of the flexible display; a lower plate spaced apart from the upper plate and connected to a lower portion of the flexible display; a supporter disposed in front of the flexible display; a linkage connected to the upper plate and the lower plate; a cam rail disposed on a base and guiding the linkage; a guide rail disposed on the base and spaced apart from the cam rail; a lifting body disposed to be raised or lowered along the guide rail; a lifting drive source configured to raise or lower the lifting body; and a rotational drive source disposed on the lifting body and configured to rotate the linkage.

The vehicle display device may further comprise a processor configured to control the rotational driving source and the lifting drive source.

The processor may control the rotational driving source in a vertical mode and the lifting drive source in a downward mode during a driving mode.

The processor may control the rotational driving source in a horizontal mode and the lifting drive source in an upward mode during a parking mode.

The supporter may comprise a plurality of cross members elongated in a short direction of the flexible display; and a guide configured to guide a pair of adjacent cross members among the plurality of cross members. A plurality of guides is provided.

A protrusion may protrude from a block of each of the plurality of cross members.

A first guide groove that guides the protrusion protruding from one block of a pair of adjacent cross members, and a second guide groove that guides the protrusion protruding from the other block of the pair of adjacent cross members are formed on the guide.

Each of the protrusion, the first guide groove, and the second guide groove may be a forward convex shape.

The linkage may comprise a lower link disposed on the lower plate; a base link rotatably connected to the lower link; a slide link slidably connected to the base link and disposed on the upper plate; and a guide link rotatably connected to the lower link, rotatably connected to the slide link, and guided by the cam rail.

A rotational shaft that rotates by the rotational drive source may protrude from the base link.

The linkage may further comprise a first shaft rotatably connecting the lower link to the base link; a second shaft rotatably connecting the lower link to the guide link; and a third shaft rotatably connecting the guide link to the slide link.

When the flexible display is in the vertical mode, a height of the second shaft may be lower than a height of the first shaft, and a height of the third shaft may be lower than the height of the second shaft.

A first shaft through-hole through which the first shaft passes may be formed in the lower link, and a first shaft coupling portion to which the first shaft is coupled may be formed in the base link.

A second shaft through-hole through which the second shaft passes may be formed in the lower link, and a second shaft coupling portion to which the second shaft is coupled may be formed in the guide link.

A third shaft through-hole through which the third shaft passes may be formed in the guide link, and a third shaft coupling portion to which the third shaft is coupled may be formed in the slide link.

The base link may comprise a link body having a rotational shaft rotated by the rotational drive source; and a lifting rail installed on the link body.

The slide link may comprise a lifting block guided along the lifting rail.

One example of the guide link may comprise a first cam follower guided along the cam rail; and a second cam follower spaced apart from the first cam follower.

The vehicle display device may further comprise a cam profile disposed on the cam rail or the base to guide the second cam follower when the linkage rotates.

The cam rail may have a slide hole formed to guide the guide link.

The cam rail may be tapered in some region of the slide hole.

The slide hole may comprise a curved region curved in a rear direction.

The other example of the guide link comprises a cam follower guided along the cam rail.

The cam rail is provided with a first slide guide portion for guiding the cam follower when the lifting body is raised or lowered; and a second slide guide portion for guiding the cam follower when the linkage rotates.

The second slide guide portion may be formed on one side surface and an upper surface of the cam rail.

### [Advantageous Effect]

According to an embodiment of the present invention, the flexible display can be both the vertical mode and bendable, thereby facilitating a driver's field of vision while driving.

Furthermore, the flexible display can be both the horizontal mode and flat, providing a screen suitable for movies, games, and the like.

### [Description of Drawings]

Fig. 1 is a view illustrating a vehicle display device according to the present embodiment,
Fig. 2 is a view illustrating a user experience provided by a variable display according to the present embodiment,
Fig. 3 is an exploded perspective view of an example of a variable display according to the present embodiment,
Fig. 4 is a rear view illustrating various examples of a flexible display module according to the present embodiment,
Fig. 5 is a perspective view illustrating a plurality of cross members and guides of a supporter according to the present embodiment,
Fig. 6 is a cross-sectional view illustrating a cross member and guide according to the present embodiment,
Fig. 7 is a control block view of an example of a variable display according to the present embodiment,
Fig. 8 is an exploded perspective view illustrating a flexible display module, a lifting body, and a base according to the present embodiment,
Fig. 9 is a view illustrating a lifting body according to the present embodiment when lowered,
Fig. 10 is a view illustrating a lifting body according to the present embodiment when raised,
Fig. 11 is an exploded perspective view of a linkage according to the present embodiment,
Fig. 12 is a view illustrating a base link and a lifting block according to the present embodiment,
Fig. 13 is a view illustrating a linkage according to the present embodiment when the flexible display module is flat,
Fig. 14 is a view illustrating a linkage according to the present embodiment when the flexible display module is bent,
Fig. 15 is a side view of a linkage according to the present embodiment when raised,
Fig. 16 is a side view of a linkage according to the present embodiment when lowered,
Fig. 17 is a perspective view illustrating a linkage, a cam rail, and a cam profile according to the present embodiment when the flexible display module is in the vertical mode,
Fig. 18 is a perspective view illustrating a linkage, a cam rail, and a cam profile according to the present embodiment when the flexible display module is in horizontal mode,
Fig. 19 is a view illustrating the other example of a variable display according to the present embodiment.

### [Best Mode]

Hereinafter, specific embodiments of the present invention will be described in detail with reference to the drawings.

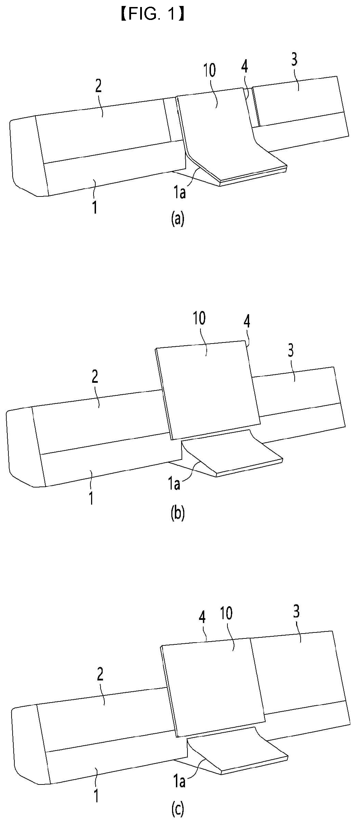

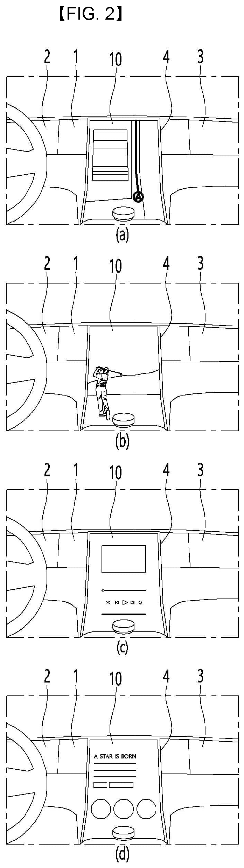

Fig. 1 is a view illustrating a vehicle display device according to the present embodiment, and Fig. 2 is a view illustrating a variable display according to the present embodiment when providing a user experience.

In this description, the direction in which the vehicle moves forward is referred to as the front direction, and the direction in which the vehicle moves backward is referred to as the rear direction.

The vehicle display device may be mounted on a vehicle dashboard 1.

A plurality of displays may be mounted on the vehicle dashboard 1.

At least one of the plurality of displays may have a variable shape.

The plurality of displays may comprise a driver's display 2 disposed in front of the driver's seat, a passenger's display 3 disposed in front of the passenger's seat, and a variable display 4 disposed between the driver's display 2 and the passenger's display 3.

The shape of the driver's display 2 may not be variable.

The passenger seat display 3 and variable display 4 can vary in shape depending on the condition of the vehicle or the passenger's situation.

Fig. 1 (a) illustrates a driving mode in which the passenger is driving the vehicle. Fig. 1 (b) illustrates a special mode in which the vehicle or passenger is in a special situation. Fig. 1 (c) illustrates a parking mode in which the vehicle is parked.

The driving mode may be a mode in which the driver drives the vehicle while holding the steering wheel.

Examples of special modes comprise a stationary mode in which the vehicle is temporarily stopped, or an autonomous driving mode in which the vehicle operates autonomously.

The special mode may be a mode other than the driving mode or the parking mode, and may be a non-driving mode.

The parking mode may be a mode in which the vehicle is parked and may be a non-driving mode.

The driver's seat display 2 may be a display that conveys information to the driver.

The driver's seat display 2 may be a display which the shape of the display does not vary regardless of the mode of the vehicle.

The passenger display 3 may be a Passenger Information Display or Co-driver Display that conveys information to the passenger in the front seat.

The passenger display 3 may have a top height which is lower in driving mode and special modes, and a top height which is high in parking mode. In parking mode, the top height of the passenger display 3 may be higher than the top height of the passenger display 3 in driving mode or special modes.

The variable display 4 may be a Center Information Display that conveys information between the driver display 2 and the passenger display 3.

The variable display 4 may comprise a flexible display 10 that may be folded.

The flexible display 10 may be longer vertically than horizontally and may be bent, as shown in Fig. 1 (a), or may be longer horizontally than vertically and may be flat, as shown in Fig. 1 (b) or Fig. 1 (c).

The variable display 4 may be in a bend-out mode, as shown in Fig. 1(a), in which the flexible display 10 is bent and the variable display 4 may be in the Portrait mode, in which the flexible display 10 is vertically elongated, when the vehicle is not in driving mode.

In driving mode, the flexible display 10 may be bent so that the lower portion of the flexible display 10 protrudes toward the vehicle interior.

In driving mode, the top height of the variable display 4 may be low. In special mode or in parking mode, the top height of the variable display 4 may be high.

In driving mode, the top height of the variable display 3 may be lower than the top height of the variable display 4 in special mode or parking mode.

In driving mode, the top height of the variable display 4 is low, allowing passengers, such as the driver, to secure a sufficient field of vision while driving.

The variable display 4 may be in a move-up mode, in which the flexible display 10 is raised compared to the driving mode, or in a rotation mode or landscape mode, in which the flexible display 10 is rotated horizontally, when the vehicle is not in driving mode.

The variable display 4 may be, as shown in Fig. 1 (b), in a move-up mode, a rotation mode, or a landscape mode, during the special mode,

The variable display 4 may be, as shown in Fig. 1 (c), in a move-up mode, a rotation mode, or a landscape mode, during the parking mode.

The flexible display 4 may comprise a bending mechanism capable of bending the flexible display 10 and a rotation mechanism capable of rotating the flexible display 10 in either a horizontal or vertical mode.

A rear protrusion 1a may protrude from the dashboard 1 of the vehicle. The rear protrusion 1a may protrude from the dashboard 1 of the vehicle toward the vehicle interior.

The upper surface of the rear protrusion 1a may be covered by the flexible display 10 when the flexible display 10 is in bend-out mode, as illustrated in Fig. 1 (a).

The upper surface of the rear protrusion 1a may be exposed into the vehicle interior when the flexible display 10 is in move-up mode, as illustrated in Fig. 1 (b) or Fig. 1 (c).

As illustrated in FIG. 2, the variable display 4 may provide a user experience UX that provides various information helpful for driving, an entertainment user experience similar to a mobile phone experience, or a user experience that facilitates efficient work while stationary.

As illustrated in Fig. 2 (a), the variable display 4 may provide a navigation view that presents map information ahead of the driving route in an easy-to-view vertical format.

As illustrated in Fig. 2 (b), the variable display 4 may provide a mobile short-form view that provides an optimal consumption experience for mobile short-form content.

As illustrated in Fig. 2 (c), the variable display 4 may provide a mobile office environment experience, such as instant video conferencing.

As illustrated in Fig. 2 (d), the variable display 4 may provide passengers with an expanded content experience.

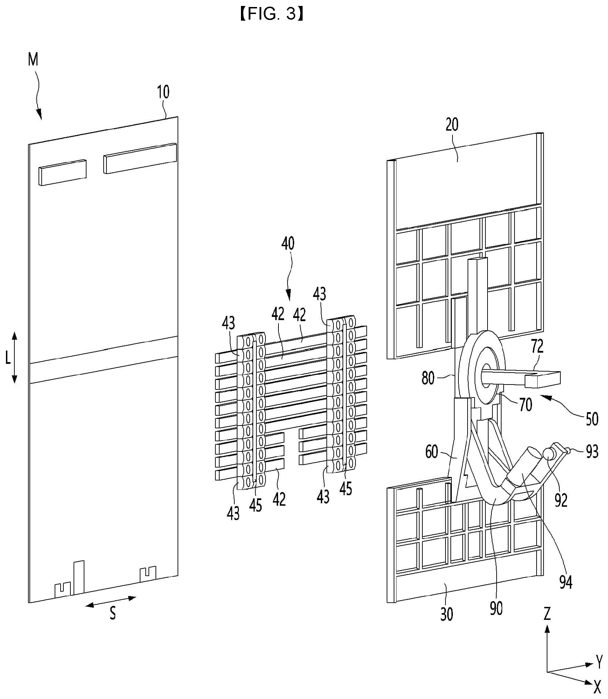

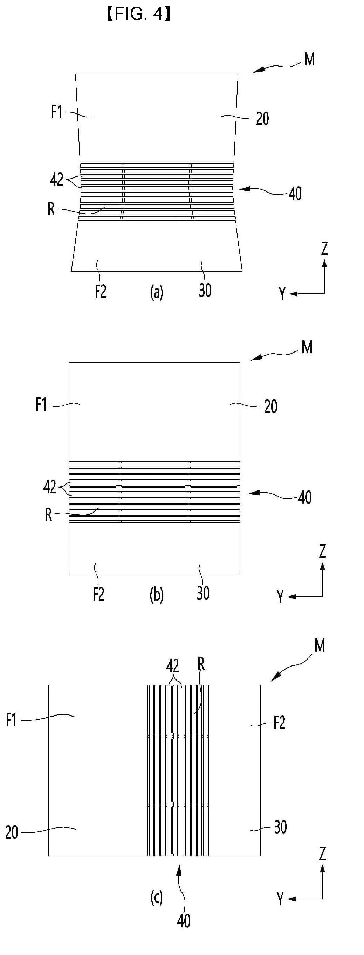

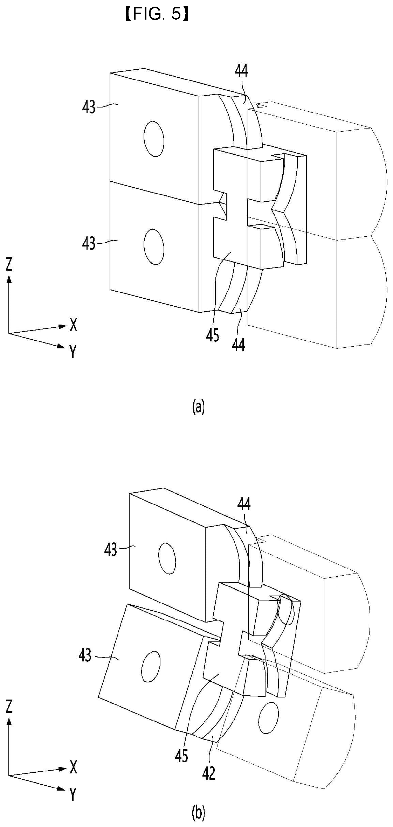

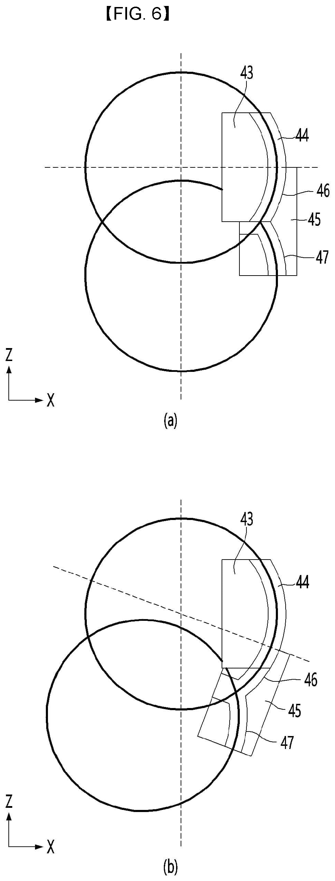

FIG. 3 is an exploded perspective view of an example of a flexible display according to the present embodiment, FIG. 4 is a rear view illustrating various examples of a flexible display module according to the present embodiment, FIG. 5 is a perspective view illustrating a plurality of cross members and guides of a supporter according to the present embodiment, and FIG. 6 is a cross-sectional view illustrating the cross members and guides according to the present embodiment.

The flexible display 4 may comprise an upper plate 20, a lower plate 30, a supporter 40, and a linkage 50.

The flexible display 10 may comprise a bendable display element. Examples of the display element may be an organic light-emitting diode OLED or a plastic OLED POLED.

The flexible display 10 may further comprise an input interface arranged on the rear surface of the display element. An example of the input interface may be a touch screen.

The flexible display 10 may further comprise a circuit board arranged on the front of the display element. An example of the circuit board may be a flexible printed circuit board FPCB using a flexible insulating substrate.

The flexible display 10 may be rectangular when flat.

The flexible display 10 may be in the vertical mode, extending vertically Z, or in horizontal mode, extending horizontally Y.

The flexible display 10 may be bendable when in the vertical mode.

The flexible display 10 may be flat when in horizontal mode.

The flexible display 10 may constitute a flexible display module M along with an upper plate 20, a lower plate 30, and a supporter 40.

As illustrated in FIG. 4, the flexible display module M may comprise a pair of flat areas F1, F2 and a flat or flexible variable area R.

Fig. 4 (a) illustrates the flexible display module M in the vertical mode and when bent, Fig. 4 (b) illustrates the flexible display module M in the vertical mode and when flat, and Fig. 4 (c) illustrates the flexible display module M in horizontal mode and when flat.

In the vertical mode of the flexible display 10, the pair of flat areas F1, F2 may comprise an upper flat area F1 and a lower flat area F2 located below the upper flat area F1.

The upper flat area F1 may be an area of the flexible display module M that comprises the upper plate 20.

The lower flat region F2 may be a region of the flexible display module M that comprises the lower plate 30.

The lower flat region F2 may be spaced apart from the upper flat region F1 in the longitudinal direction of the flexible display module M.

The variable region R may connect a pair of flat regions F1, F2. The variable region R may be a region located between the pair of flat regions F1, F2.

The variable region R may be a region of the flexible display module M that does not comprise the upper plate 20 and the lower plate 30. The variable region R may be a region of the flexible display module M that comprises the supporter 40.

When the variable region R is bent, one of the pair of flat regions F1, F2 may be arranged at an angle relative to the other F1. A portion of the variable region R may be bent backward, and the lower flat region F2 may be at a different angle from the upper flat region F1.

The upper plate 20 may be connected to the upper portion of the flexible display 10. The upper plate 20 may be formed of a resin such as plastic, or a metal such as aluminum or steel.

When the flexible display 10 is in the vertical mode, the upper portion of the flexible display 10 may be defined as a portion higher than the center of the flexible display 10 in the vertical direction. The upper plate 20 may be disposed on the upper front surface of the flexible display 10 and may be covered by the upper portion of the flexible display 10.

The lower plate 30 may be connected to the lower portion of the flexible display 10. The lower plate 30 may be formed of a resin such as plastic, or a metal such as aluminum or steel.

When the flexible display 10 is in the vertical mode, the lower portion of the flexible display 10 may be defined as a portion lower than the center of the flexible display 10 in the vertical direction. The lower plate 30 may be disposed on the lower front surface of the flexible display 10 and may be covered by the lower portion of the flexible display 10.

The lower plate 30 may be spaced apart from the upper plate 20. When the flexible display 10 is in the vertical mode, the lower plate 30 may be spaced apart from the upper plate 20 in the vertical direction Z, as illustrated in Fig. 4 (b). When the flexible display 10 is in horizontal mode, the lower plate 30 may be spaced apart from the upper plate 20 in the left-right direction Y, as illustrated in Fig. 4 (c).

The supporter 40 may be disposed in front of the flexible display 10. When a passenger presses the flexible display 10 forward, the supporter 40 may support the flexible display 10 to prevent it from being pushed forward.

The supporter 40 may comprise a cross member 42 and a guide 45, as illustrated in FIGS. 3, 5, and 6.

The cross member 42 may extend in a short direction S of a longitudinal direction L and the short direction S of the flexible display 10. A plurality of cross members 42 may be provided.

The plurality of cross members 42 may be disposed in a row along the longitudinal direction L of the flexible display 10.

When the flexible display 10 is in the vertical mode, each of the plurality of cross members 42 may extend in the left-right direction Y and be disposed in a line in the vertical direction Z, as shown in Fig. 4 (a) and Fig. 4 (b).

When the flexible display 10 is in horizontal mode, each of the plurality of cross members 42 may extend in the vertical direction Z and be disposed in a line in the left-right direction Y, as shown in Fig. 4 (c).

When the flexible display 10 is in the vertical mode, the uppermost cross member 42 among the plurality of cross members may be coupled to the upper plate 20.

When the flexible display 10 is in the vertical mode, the lowermost cross member 42 among the plurality of cross members may be coupled to the lower plate 30.

Each of the plurality of cross members 42 may be connected to the front surface of the flexible display 10.

The upper plate 20 and the lower plate 30 may be connected by the plurality of cross members 42.

The cross member 42 may comprise a cross body and a block 43, refer to FIGS. 5 and 6 guided by a guide 45.

The block 43 may be integrally formed on the front surface of the cross body or may be connected to the cross body using screws, double-sided tape, or the like.

The guide 45 may guide a pair of adjacent cross members 42 among the plurality of cross members 42.

A plurality of guides 45 may be provided. When the flexible display 10 is in the vertical mode, the plurality of guides 45 may be spaced apart from each other in the vertical direction Z or disposed in a row in the vertical direction Z. When the flexible display 10 is in horizontal mode, the plurality of guides 45 may be spaced apart from each other in the left-right direction Y and disposed in a row in the left-right direction Y.

Fig. 5 (a) illustrates a flexible display module M when it is flat, and Fig. 5 (b) illustrates a flexible display module M when it is bent.

Fig. 6 (a) illustrates a flexible display module M when it is flat, and Fig. 6 (b) illustrates a flexible display module M when it is bent.

As illustrated in Figs. 5 and 6, a protrusion 44 may be formed on each block 43 of the plurality of cross members 42, and a guide groove may be formed on the guide 45 to guide the protrusion 44.

The protrusion 44 of the block 43 may be convex in the front direction.

A pair of guide grooves 46 and 47 may be formed in the guide 45. The pair of guide grooves 46 and 47 may comprise a first guide groove 46 and a second guide groove 47.

The first guide groove 46 may guide a protrusion 44 protruding from one block 43 of an adjacent pair of cross members 42.

The second guide groove 47 may guide a protrusion 44 protruding from another block 43 of an adjacent pair of cross members 42.

Each of the first guide groove 46 and the second guide groove 47 may have a forward convex shape.

The cross-sectional shape of the protrusion 44, the first guide groove 46, and the second guide groove 47 may each be arc-shaped, and may all be formed with the same curvature.

As illustrated in FIG. 4, the linkage 50 may be connected to each of the upper plate 20 and the lower plate 30.

The linkage 50 may press the lower plate 30 backward, as shown in Fig. 4 (a), such that the lower plate 30 moves at a different angle from the upper plate 20.

The linkage 50 may pull the lower plate 30 forward, as shown in Fig. 4 (b), such that the lower plate 30 moves at the same angle as the upper plate 20.

As illustrated in FIG. 3, the linkage 50 may comprise a lower link 60, a base link 70, a slide link 80, and a guide link 90.

The lower link 60 may be disposed on the lower plate 30. One example of the lower link 60 may protrude from the lower plate 30. The other example of the lower link 60 may be connected to the lower plate 30 using a fastening member, such as a screw.

The lower link 60 may be rotatably connected to the base link 70.

The base link 70 comprise may be disposed a rotation shaft 72 so as to protrude forward, and the linkage 50 may be rotated around the rotation shaft 72. The flexible display module M may be rotated in either a vertical direction or horizontal direction by the rotation shaft 72. The base link 70 may be a rotary link that rotates around the rotational shaft 72.

The slide link 80 may be disposed on the upper plate 20. One example of the slide link 80 may protrude from the upper plate 20. The other example of the slide link 80 may be connected to the upper plate 20 using a fastening member, such as a screw.

The guide link 90 may comprise at least one cam follower. A plurality of cam followers may be provided on the guide link 90, and the plurality of cam followers may comprise a first cam follower 92 and a second cam follower 94.

The first cam follower 92 may comprise a follower protrusion 93.

The first cam follower 92 may be formed on the front portion of the guide link 90.

When the flexible display module M is in the vertical mode, the follower protrusion 93 may extend in the left-right direction Y.

The second cam follower 94 can be spaced apart from the first cam follower 92.

When the flexible display module M is in the vertical mode, the second cam follower 94 can be spaced apart from the first cam follower 92 in the left-right direction Y.

When the guide link 90 is retracted in the rear direction, the guide link 90 may push the lower link 60 in the rear direction, and the lower link 60 may rotate around the base link 70, thereby bending the flexible display module M.

When the guide link 90 moves forward, the guide link 90 may pull the lower link 60 in the front direction, and the lower link 60 may rotate counterclockwise around the base link 70, allowing the flexible display module M to flatten.

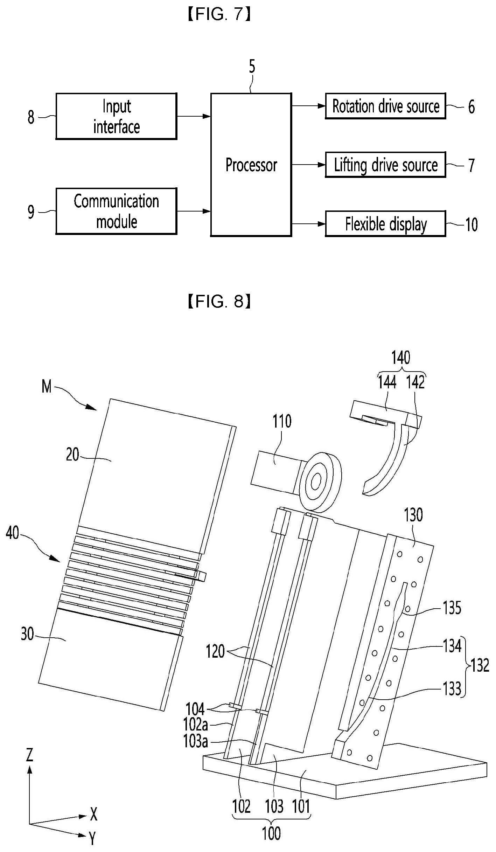

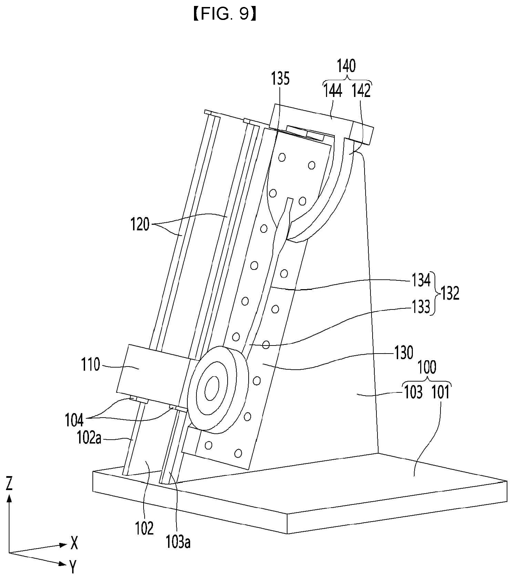

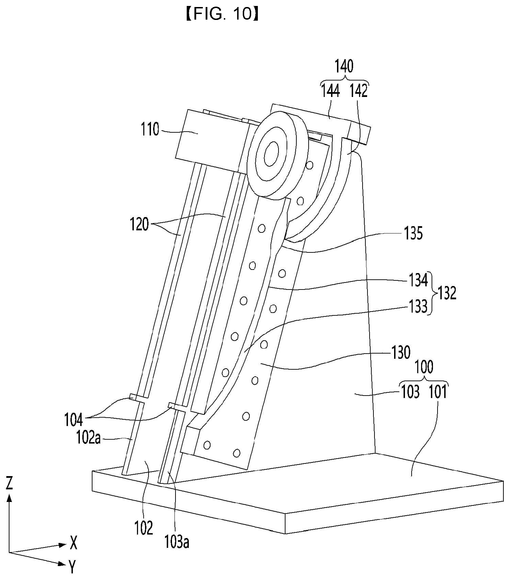

Fig. 7 is a control block view of an example of a variable display according to the present embodiment. Fig. 8 is an exploded perspective view illustrating a flexible display module, a lifting body, and a base according to the present embodiment. Fig. 9 is a view illustrating the lifting body according to the present embodiment when lowered, and Fig. 10 is a view illustrating the lifting body according to the present embodiment when raised.

The variable display 4 may further comprise a processor 5, a rotational drive source 6, and a lifting drive source 7.

The processor 5 may control the overall operation of the variable display 4.

The processor 5 may transmit control signals to the flexible display 10.

The rotational drive source 6 may be a linkage drive source that rotates the linkage 50. The rotational drive source 6 may be a rotational shaft drive source that rotates the rotational shaft 72 of the linkage 50.

An example of the rotational drive source 6 may comprise a rotational motor connected to the rotational shaft 72 and rotating the rotational shaft 72.

The other example of the rotational drive source 6 may comprise a rotational motor and at least one power transmission member that transmits the driving force of the rotational motor to the rotational shaft 72. The power transmission member may comprise A plurality of gears connected to the drive shaft of the rotational motor. When the rotational motor is driven, the power transmission member may rotate the rotational shaft 72.

The rotational drive source 6 may be disposed on the lifting body 110, refer to FIGS. 8 to 10, which will be described later. The rotation motor may be disposed on the lifting body 110 and may be raised or lowered together with the lifting body 110.

The lifting drive source 7 may be a drive source that raises or lowers the lifting body 110.

An example of the lifting drive source 7 may comprise a lifting motor connected to the lifting body 110 and rotating the lifting body 110.

The other example of the rotation drive source 7 may comprise a lifting motor and at least one power transmission member that transmits the driving force of the lifting motor to the lifting body 110. The power transmission member may comprise a plurality of gears connected to the drive shaft of the lifting motor. When the lifting motor is driven, the power transmission member may raise or lower the lifting body 110.

The processor 5 may control the rotation drive source 6 and the lifting drive source 7. The processor 5 may transmit control signals to the rotation motor depending on the mode. The processor 5 may also transmit control signals to the lifting motor depending on the mode.

In the driving mode, the processor 5 may control the rotation drive source 6 in vertical mode and the lifting drive source 7 in downward mode.

When the rotation drive source 6 is controlled in vertical mode and the lifting drive source 7 is controlled in downward mode, the flexible display 10 may be elongated in the vertical direction and bent, as illustrated in Fig. 1 (a).

In the special mode, the processor 5 can control the rotation drive source 6 in horizontal mode and the lifting drive source 7 in upward mode.

In the special mode, when the rotation drive source 6 is controlled in horizontal mode and the lifting drive source 7 is controlled in upward mode, the flexible display 10 can be elongated in the horizontal direction, as illustrated in Fig. 1 (b), and the top height of the flexible display 10 may be higher than the top height of the flexible display 10 in the driving mode.

In the parking mode, the processor 5 may control the rotation drive source 6 in horizontal mode and the lifting drive source 7 in upward mode.

In the parking mode, when the rotation drive source 6 is controlled in horizontal mode and the lifting drive source 7 is controlled in upward mode, the flexible display 10 can be elongated in the horizontal direction, as illustrated in Fig. 1 (c), and the top height of the flexible display 10 may be higher than the top height of the flexible display 10 in the driving mode.

The variable display 4 may further comprise an input interface 8. The input interface 8 may comprise an input interface of a flexible display 10.

The input interface 8 may comprise a touchscreen, buttons, or switches located on the variable display 4 or the dashboard 1, refer to FIG. 1.

A passenger can input a mode through the input interface 8, and the processor 5 may control the variable display 4 based on the input mode.

The variable display 4 may further comprise a communication module 9.

The communication module 9 may communicate with a vehicle processor or main MCU installed in the vehicle, and a vehicle mode may be transmitted to the processor 5 via the communication module 9.

When the vehicle is in driving mode, special mode, or parking mode, the vehicle processor or main MCU may transmit a signal corresponding to the mode to the communication module 9, the communication module 9 may then transmit the signal corresponding to the mode to the processor 5, the processor 5 may then control the variable display 4 based on the signal corresponding to the mode transmitted via the communication module 9.

The variable display 4 may comprise a base 100, a lifting body 110, a guide rail 120, and a cam rail 130, as illustrated in FIGS. 8 to 10.

The base 100 may be formed integrally with the dashboard 1, refer to FIG. 1 or may be formed separately from the dashboard 1 and then attached to the dashboard 1 using screws, hooks, or the like.

The base 100 may comprise a lower plate 101 and a pair of side bodies 102,103 erected on the lower plate 101.

The pair of side bodies 102,103 may be spaced apart in the left-right direction Y.

A space may be formed between the pair of side bodies 102,103, and the lifting drive source 7 may be accommodated in the space. The lifting drive source 7 may be mounted on the lower plate 101 and at least one of the pair of side bodies 102,103. The lifting motor may be mounted on the lower plate 101 and at least one of the pair of side bodies 102,103.

The rear ends 102a,103a of the pair of side bodies 102,103 may be inclined with respect to a vertical plane. The rear ends 102a,103a of the pair of side bodies 102,103 and the vertical plane may have an acute inclination angle.

A stopper 104 that supports the lower end of the guide rail 120 may protrude from the base 100. The stopper 104 may be formed on the rear ends 102a,103a of each of the pair of side bodies 102,103. The stopper 104 may be closer to the bottom of the base 100 than the top of the base 100.

The stopper 104 may comprise a left stopper protruding rearward from the left side body 102 of the pair of side bodies 102,103, and a right stopper protruding rearward from the right side body 102 of the pair of side bodies 102,103.

The lifting body 110 may be raised or lowered along the guide rail 120. The lifting body 110 may be raised or lowered in the longitudinal direction of the guide rail 120.

The lifting body 110 may be raised or lowered in the vertical direction Z or in an inclined direction close to the vertical direction Z. When the guide rail 120 is disposed longitudinally in the vertical direction Z, the lifting body 110 may be raised or lowered in the vertical direction Z. When the guide rail 120 is disposed in an inclined direction close to the vertical direction Z, the lifting body 110 may be raised or lowered in an inclined direction close to the vertical direction Z.

The guide rail 120 may be disposed on the base 100 spaced apart from the cam rail 130.

The guide rail 120 may be disposed at an acute angle relative to a vertical plane.

A plurality of guide rails 120 may be formed. The plurality of guide rails may comprise a left guide rail and a right guide rail.

The left guide rail may be disposed at the rear end 102a of the left body 102 among the pair of side bodies 102,103. The right guide rail may be disposed at the rear end 103a of the right body 103 among the pair of side bodies 102,103.

The cam rail 130 may be disposed on the base 100 and may guide the linkage 50.

The cam rail 130 may be disposed on one 103 of the pair of side bodies 102,103.

The cam rail 130 may be fastened to the side surface of one 103 of the pair of side bodies 102,103. A cam rail fastening portion may be formed on one 103 of the pair of side bodies 102,103 to which the cam rail 130 may be fastened using a fastening member such as a screw.

The cam rail 130 may be disposed to extend in the vertical direction Z or in an oblique direction close to the vertical direction Z.

The cam rail 130 may be provided with a slide guide portion that guides the linkage 50.

An example of a slide guide portion may be a slide hole 132 formed through the cam rail 130. Another example of a slide guide portion may be a slide groove recessed into one surface of the cam rail 130.

Hereinafter, the slide guide portion is described as a slide hole 132, but it is of course possible for a slide groove to be formed instead of the slide hole 132.

The slide hole 132 may be a guide hole that guides the guide link 90. The slide hole 130 may be a hole that guides the first cam follower 92, refer to FIG. 3 provided on the guide link 90, refer to FIG. 3. The follower protrusion 93, refer to FIG. 3 of the first cam follower 92 may be inserted into the slide hole 132 from the outside of the slide hole 132, and after being inserted into the slide hole 132, may be guided along the slide hole 132 in the longitudinal direction.

The slide hole 132 may comprise a curved region 133. The curved region 133 may be curved backward.

The slide hole 132 may comprise a straight region 134. The straight region 134 may extend from the top of the curved region 133.

The cam rail 130 may have a taper 135 formed in a portion of the slide hole 132.

The taper 135 may be formed to be recessed on an exposed surface of the cam rail 130.

A plurality of tapers 135 may be formed on the cam rail 130. The plurality of tapers 135 may be formed at the front and rear of the straight region 134. The plurality of tapers 135 may comprise a front taper formed at the front of the slide hole 130 and a rear taper formed at the rear of the slide hole 130.

The follower protrusion 93, refer to FIG. 3 of the first cam follower 92 may be easily inserted into the slide hole 132 by the taper 135.

When the lifting body 110 is raised or lowered, the first cam follower 92 may be guided along the slide hole 132, and the guide link 90 may rotate the lower link 30.

When the first cam follower 92 descends along the slide hole 132, the guide link 90 may rotate backward, and the flexible display 10 may be bent.

When the first cam follower 92 ascends along the slide hole 132, the guide link 90 may rotate forward, and the flexible display 10 may unfold flat.

The variable display may further comprise a cam profile 140.

The cam profile 140 may be disposed on the base 100 or the cam rail 130. The cam profile 140 may be disposed on the upper end of the cam rail 130. The cam profile 140 may guide the second cam follower 94, refer to FIG. 3 when the linkage 50 rotates.

The cam profile 140 may comprise a guide body 142 with which a second cam follower 94, refer to FIG. 3 comes into contact. The cam profile 140 may further comprise a connecting body 144.

The guide body 142 may be spaced apart from the cam rail 130 in the left-right direction Y.

The connecting body 144 may be connected to the top of the base 100 or the top of the cam rail 130.

The second cam follower 94 may come into contact with the cam profile 140 when the rotation shaft 72 rotates, and the flexible display 10 may remain in an unfolded state when the rotation shaft 72 rotates.

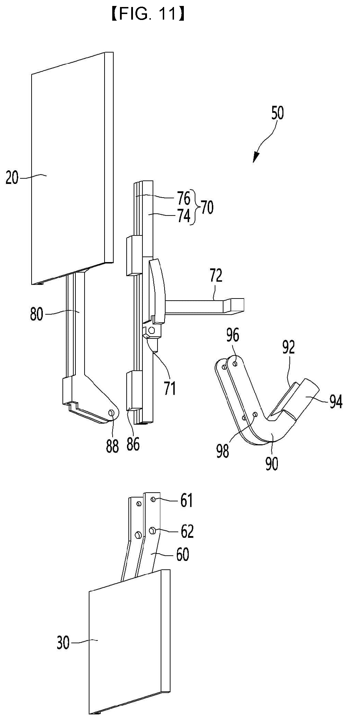

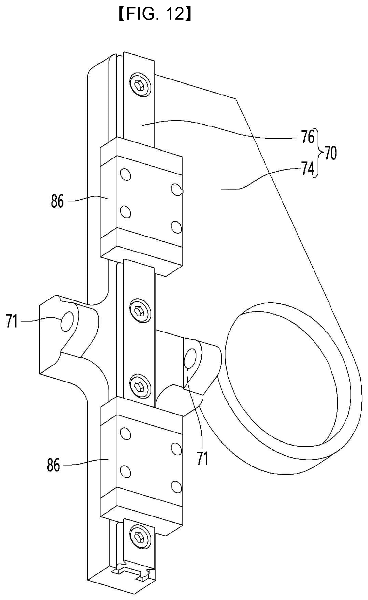

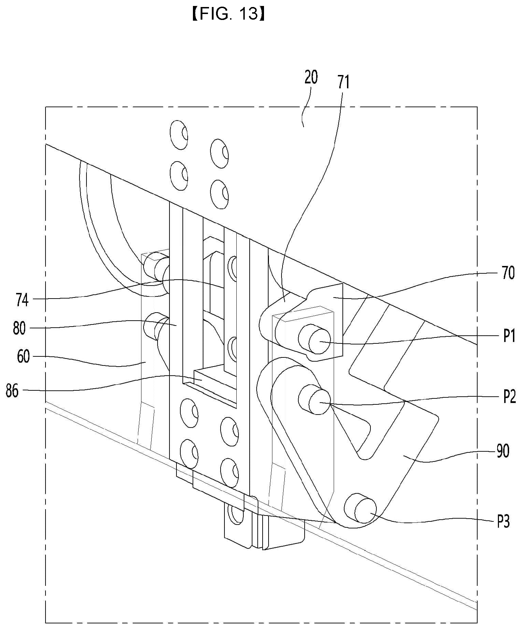

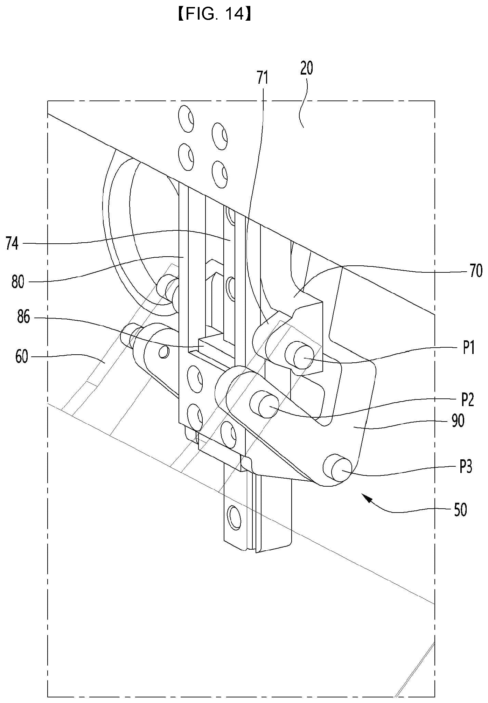

FIG. 11 is an exploded perspective view of a linkage according to the present embodiment, FIG. 12 is a view illustrating a base link and a lifting block according to the present embodiment, FIG. 13 is a view illustrating a linkage according to the present embodiment when the flexible display module is flat, and FIG. 14 is a view illustrating a linkage according to the present embodiment when the flexible display module is bent.

As illustrated in FIGS. 13 and 14, the linkage 50 may comprise a first shaft P1, a second shaft P2, and a third shaft P3.

The first shaft P1 may rotatably connect the lower link 60 to the base link 70. The lower link 60 may be rotatably connected to the base link 70 by the first shaft P1.

The lower link 60 may have a first shaft through-hole 61 through which the first shaft P1 passes, and the base link 70 may have a first shaft coupling portion 71 to which the first shaft P1 is coupled. The lower link 60 may rotate around the first shaft P1.

A second shaft P2 may rotatably connect the lower link 60 to a guide link 90. The lower link 60 may be rotatably connected to the guide link 90 by the second shaft P2.

The lower link 60 may have a second shaft through-hole 62 through which the second shaft P2 passes, and the guide link 90 may have a second shaft coupling portion 96 to which the second shaft P2 is coupled. The lower link 60 may rotate by the guide link 90. The lower link 60 may be rotated backward or forward relative to the base link 70.

When the flexible display 10 is in the vertical mode, the height of the second shaft P2 may be lower than the height of the first shaft P1.

A rotational shaft 72 rotated by a rotational drive source 6 may protrude from the base link 70. The rotational shaft 72 may protrude forward from the base link 70. The rotational shaft 72 may extend in the front-rear direction X.

The base link 70 may comprise a link body 74 and a lifting rail 76.

The rotational shaft 72 may be disposed on the link body 74.

The lifting rail 76 may be installed on the link body 74. The lifting rail 76 may be installed on the rear surface of the link body 74.

The slide link 80 may be slidably disposed on the base link 70.

A lifting block 86 may be disposed on the slide link 80. The lifting block 86 may be guided along the lifting rail 76.

The guide link 90 may rotate the lower link 60 while being rotatably connected to the slide link 80.

A third shaft P3 may rotatably connect the guide link 90 to the slide link 80. The guide link 90 may be rotatably connected to the slide link 80 by the third shaft P3.

The guide link 90 may be provided with a third-shaft through-hole 98 through which the third shaft P3 passes, and the slide link 80 may be provided with a third-shaft coupling portion 88 to which the third shaft P3 is coupled. The guide link 90 may rotate around the third shaft P3, and the guide link 90 may rotate the lower link 60.

When the flexible display 10 is in the vertical mode, the height of the third shaft P3 may be lower than the height of the second shaft P2.

The guide link 90 may be guided along the cam rail 120.

The guide link 90 may be lowered along the cam rail 120 when the lifting body 110 is lowered. When the guide link 90 is lowered, the guide link 90 may rotate the lower link 60 in a rear direction.

When the lift body 110 is raised, the guide link 90 may be raised along the gantry rail 120. When the guide link 90 is raised, the guide link 90 may rotate the lower link 60 in front direction.

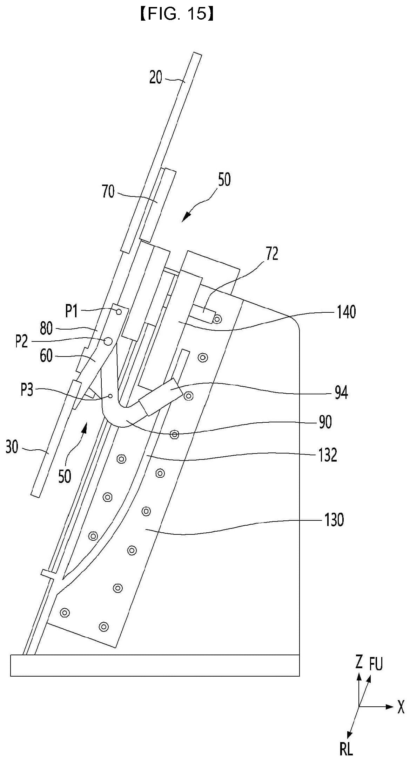

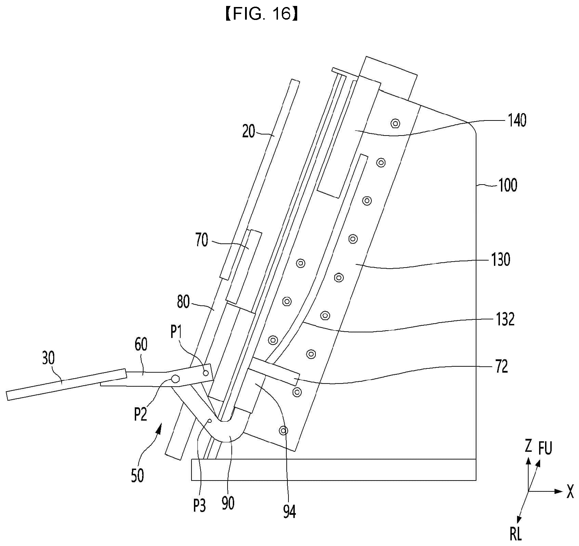

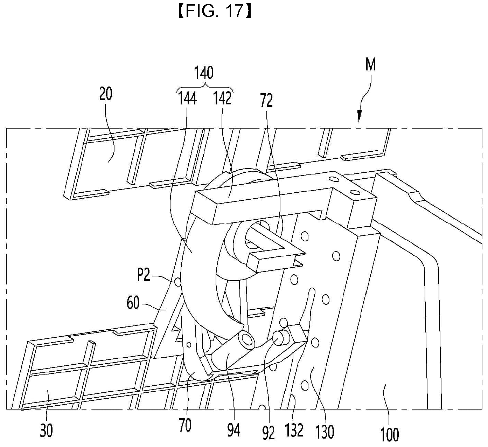

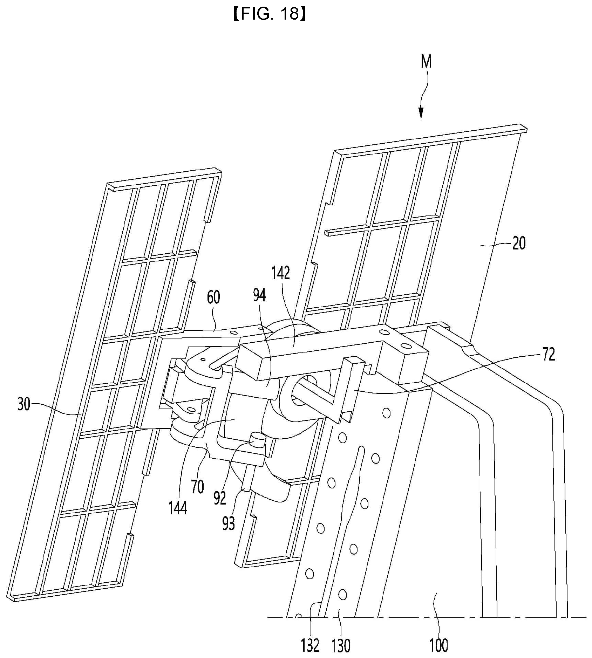

FIG. 15 is a side view of a linkage according to the present embodiment when raised, FIG. 16 is a side view of a linkage according to the present embodiment when lowered, FIG. 17 is a perspective view illustrating a linkage, a cam rail, and a cam profile when the flexible display module according to the present embodiment is in vertical mode, and FIG. 18 is a perspective view illustrating a linkage, a cam rail, and a cam profile when the flexible display module according to the present embodiment is in horizontal mode.

The first cam follower 92 may be guided along the cam rail 130.

The lifting body 110 may be lowered from a raised height to a lowered height, and may be raised from the lowered height to the raised height.

When the lifting body 110 is lowered, the first cam follower 92 formed on the guide link 90 of the linkage 50 may gradually descend along the slide hole 132, the guide link 90 may gradually move in a rear-down direction RL, and the guide link 90 may press the lower link 60 in the rear direction.

The lower link 60 may be rotated around the base link 70 by the guide link 90, and the lower plate 30 may be disposed at a different angle from the upper plate 20. The flexible display module M may be bent while being lowered.

When the lifting body 110 is raised, the first cam follower 92 formed on the guide link 90 of the linkage 50 may gradually rise along the slide hole 132, the guide link 90 may gradually move in front-up direction FU, and the guide link 90 may pull the lower link 60 in the front direction.

The lower link 60 may be counter-rotated around the base link 70 by the guide link 90, and the lower plate 30 may be disposed at the same angle as the upper plate 20. The flexible display module M may be deformed flat as it is raised.

The second cam follower 94 may be disposed in contact with the cam profile 140 and guided by the cam profile 140 when the linkage 50 rotates.

When the rotational drive source 6 changes from vertical mode to horizontal mode, the rotational shaft 72 rotates, and the linkage 50 may rotate the upper plate 20 and the lower plate 30. When the rotational drive source 6 changes from vertical mode to horizontal mode, the first cam follower 92 may cause the cam rail 130 to exit the slide hole 132. In addition, the second cam follower 94 may be guided by the cam profile 140 while the rotational shaft 72 rotates.

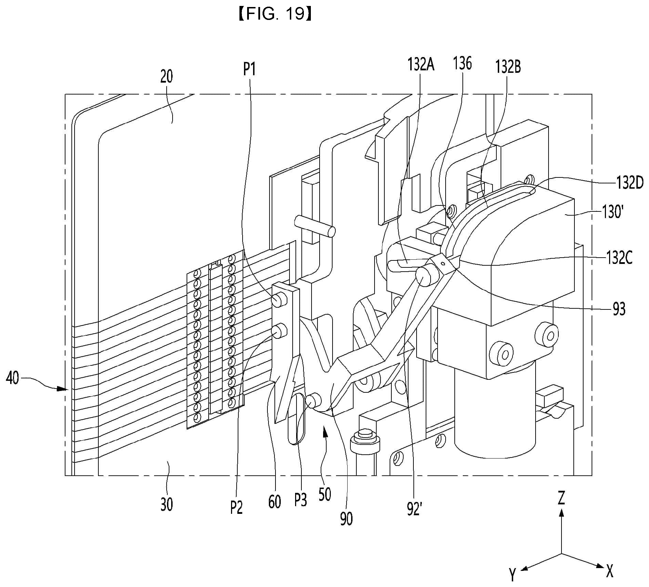

Fig. 19 is a view illustrating another example of a variable display according to the present embodiment.

The other example of a variable display may comprise a single cam follower 92' disposed on a guide link 90 and a cam rail 130' having a slide guide portion formed thereon.

Other than the cam follower 92' and cam rail 130', other components and functions are identical to one example of the variable display 4, and therefore, the same reference numerals are used, and their descriptions are omitted.

The first cam follower 92 and the second cam follower 94 illustrated in FIG. 17 may be integrated into a single cam follower 92' illustrated in FIG. 19.

The cam follower 92' may comprise a follower protrusion 93.

The cam rail 130 and cam profile 140 illustrated in FIG. 17 may be integrated into the cam rail 130' illustrated in FIG. 19.

The cam rail 130' may be disposed on the base 100, as one example the variable display 4.

A plurality of slide guides may be formed on the cam rail 130'. The plurality of slide guides may comprise a first slide guide portion 132A that guides the cam follower 92' when the lifting body 110 is raised and lowered, and a second slide guide portion 132B that guides the cam follower 92' when the flexible display module M rotates.

An example of the first slide guide portion 132A may be a slide hole formed through the cam rail 130, and the other example of the first slide guide portion 132A may be a slide groove recessed into one surface of the cam rail 130.

When the linkage 50 is rotated by the rotation shaft 72, the second slide guide portion 132B may assist the flexible display module M in rotating in either a horizontal or vertical mode by guiding the cam follower 92'.

One example of the second slide guide portion 132B may be a slide hole formed through the cam rail 130. The other example of the second slide guide portion 132B may be a slide groove recessed into one surface of the cam rail 130.

Hereinafter, the first slide guide portion 132A will be described as a slide hole, and the first slide guide and the slide hole will be designated by the reference numeral 132A. Furthermore, the second slide guide portion 132B will be described as a slide groove, and the second slide guide portion and the slide groove will be designated by the reference numeral 132B.

The slide hole 132A and the slide groove 132B may each be opened in the left-right direction Y.

The slide hole 132A and the slide groove 132B may be connected. The front end of the slide hole 132A may be connected to the lower end of the slide groove 132B.

The slide hole 132A may be formed to extend in an inclined direction of the rear-down direction. Here, the inclined direction of the rear-down direction may be the inclined direction between a horizontal direction and a vertical direction, and may be a direction closer to the horizontal direction than the vertical direction.

The front end height of the slide hole 132A may be higher than the rear end height of the slide hole 132A.

The cam follower 92' may be guided from the front end of the slide hole 132A to the rear end of the slide hole 132A, and the guide link 90 may rotate the lower plate 30 in a rear direction, and the flexible display 10 may be bent.

The cam follower 92' may be guided from the rear end of the slide hole 132A to the front end of the slide hole 132A, and the guide link 90 may counter-rotate the lower plate 30 in a front direction. The flexible display 10 may be deformed flat.

The slide groove 132B may be formed to be inclined in the incline direction of a rear-down direction or formed in a vertical direction. Here, the incline direction of a rear-down direction may be an incline direction between the horizontal and vertical directions, and may be a direction closer to the vertical direction than the horizontal direction.

The slide groove 132B can be formed to extend in the left-right direction Y.

The slide groove 132B may be formed on both one side surface and the upper surface of the cam rail 130'.

One end 132C of the slide groove 132B in the left-right direction Y may be formed on one side of the cam rail 130', and the other end 132D of the slide groove 132B in the left-right direction Y may be formed on the upper surface of the cam rail 130'.

The height of one end 132C of the slide groove 132B may be lower than the height of the other end 132D of the slide groove 132B.

The cam rail 130' may comprise a curved surface 136 connecting one side surface and the upper surface.

When the rotation shaft 72 rotates and the guide link 90 rotates around the rotation shaft 72, the guide link 90 may be guided by the curved surface 136.

The slide groove 132B may be formed to extend across one side of the cam rail 130', the curved surface 136, and the upper surface of the cam 130'.

The lower end of the slide groove 132B may be formed on one side surface of the cam rail 130', and the upper end of the slide groove 132B may be formed on the upper surface of the cam rail 130'.

The cam follower 92' located at the front end of the slide hole 132A may enter the slide groove 132B and be guided along the slide groove 132B when the rotation shaft 72 rotates.

The cam follower 92' may be guided from one end 132C of the left-right direction Y of the slide groove 132B to the other end 132D of the left-right direction Y of the slide groove 132B, and the cam follower 92' may be guided in one of the clockwise and counterclockwise directions with the rotation shaft 72 as the rotation center, and the cam follower 92 may be moved to the upper side of the cam rail 130'.

The cam follower 92' may be guided from the other end 132D of the left-right direction Y of the slide groove 132B to the one end 132C of the left-right direction Y of the slide groove 132B, and the cam follower 92' may be guided in the other of the clockwise and counterclockwise directions with the rotation shaft 72 as the rotation center, and the cam follower 92' can be moved to one side of the cam rail 130'.

When the lifting body 110 descends, the cam follower 92' located at one end 132C of the slide groove 132B may enter the front end of the slide hole 132A and be guided along the slide hole 132A to the rear end of the slide hole 132A.

When the lifting body 110 ascends, the cam follower 92' located at the rear end of the slide hole 132A may be guided along the slide hole 132A to the front end of the slide hole 132A.

The above description is merely an example of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but to explain it, and the scope of the technical idea of the present disclosure is not limited by these embodiments.

The scope of protection of the present disclosure should be interpreted by the claims below, and all technical ideas within a scope equivalent thereto should be interpreted as being included in the scope of the rights of the present disclosure.

## Claims

1. A vehicle display device comprising:
a flexible display;
an upper plate connected to an upper portion of the flexible display;
a lower plate spaced apart from the upper plate and connected to a lower portion of the flexible display;
a supporter disposed in front of the flexible display;
a linkage connected to the upper plate and the lower plate;
a cam rail disposed on a base and guiding the linkage;
a guide rail disposed on the base and spaced apart from the cam rail;
a lifting body disposed to be raised or lowered along the guide rail;
a lifting drive source configured to raise or lower the lifting body; and
a rotational drive source disposed on the lifting body and configured to rotate the linkage.

2. The vehicle display device of claim 1, further comprising a processor configured to control the rotational driving source and the lifting drive source,
wherein the processor is configured to control the rotational driving source in a vertical mode and the lifting drive source in a downward mode during a driving mode.

3. The vehicle display device of claim 1
wherein the processor is configured to control the rotational driving source in a horizontal mode and the lifting drive source in an upward mode during a parking mode.

4. The vehicle display device of claim 1,
wherein the supporter comprises;
a plurality of cross members elongated in a short direction of the flexible display;
a guide configured to guide a pair of adjacent cross members among the plurality of cross members, and
wherein the vehicle display device comprises a plurality of guides.

5. The vehicle display device of claim 4,
wherein a protrusion protrudes from a block of each of the plurality of cross members
a first guide groove that guides the protrusion protruding from one block of a pair of adjacent cross members, and a second guide groove that guides the protrusion protruding from the other block of the pair of adjacent cross members are formed on the guide,
wherein each of the protrusion, the first guide groove, and the second guide groove has a forward convex shape.

6. The vehicle display device of claim 1,
wherein the linkage comprises:
a lower link disposed on the lower plate;
a base link rotatably connected to the lower link;
a slide link slidably connected to the base link and disposed on the upper plate;
a guide link rotatably connected to the lower link, rotatably connected to the slide link, and guided by the cam rail.

7. The vehicle display device of claim 6,
wherein a rotational shaft that rotates by the rotational drive source protrudes from the base link.

8. The vehicle display device of claim 6,
wherein the linkage further comprises:
a first shaft rotatably connecting the lower link to the base link;
a second shaft rotatably connecting the lower link to the guide link; and
a third shaft rotatably connecting the guide link to the slide link.

9. The vehicle display device of claim 8,
wherein
when the flexible display is in the vertical mode,
a height of the second shaft is lower than a height of the first shaft, and a height of the third shaft is lower than the height of the second shaft.

10. The vehicle display device of claim 8,
wherein a first shaft through-hole through which the first shaft passes is formed in the lower link, and
a first shaft coupling portion to which the first shaft is coupled is formed in the base link.

11. The vehicle display device of claim 8,
wherein a second shaft through-hole through which the second shaft passes is formed in the lower link,
a second shaft coupling portion to which the second shaft is coupled is formed in the guide link.

12. The vehicle display device of claim 8,
wherein a third shaft through-hole through which the third shaft passes is formed in the guide link, and
a third shaft coupling portion to which the third shaft is coupled is formed in the slide link.

13. The vehicle display device of claim 6,
wherein the base link comprises:
a link body having a rotational shaft rotated by the rotational drive source; and
a lifting rail installed on the link body.

14. The vehicle display device of claim 13,
wherein the slide link comprises a lifting block guided along the lifting rail.

15. The vehicle display device of claim 6,
wherein the guide link comprises;
a first cam follower guided along the cam rail; and
a second cam follower spaced apart from the first cam follower.

16. The vehicle display device of claim 15, further including
a cam profile disposed on the cam rail or the base to guide the second cam follower when the linkage rotates.

17. The vehicle display device of claim 6,
wherein the cam rail has a slide hole formed to guide the guide link, and
wherein the cam rail is tapered in some region of the slide hole.

18. The vehicle display device of claim 17,
wherein the slide hole comprises a curved region curved in a rear direction.

19. The vehicle display device of claim 6,
wherein the guide link comprises a cam follower guided along the cam rail, and the cam rail is provided with:
a first slide guide portion for guiding the cam follower when the lifting body is raised or lowered; and
a second slide guide portion for guiding the cam follower when the linkage rotates.

20. The vehicle display device of claim 19,
wherein the second slide guide portion is formed on one side surface and an upper surface of the cam rail.
